# EUROPÄISCHE PATENTANMELDUNG

(11) **EP 1 992 937 A1**
(43) Veröffentlichungstag der Anmeldung: **19.11.2008**
(21) Anmeldenummer: 07009646.6
(22) Anmeldetag: 14.05.2007
(51) Int. Cl.: G01N 21/35, G01N 21/95, B65B 1/30

(54) **Verfahren zum Verifizieren des Füllvolumes von Blisterhöfen**

(71) Anmelder: Uhlmann VisioTec GmbH, 88471 Laupheim (DE)
(72) Erfinder: Mertens, Richard, 88471 Laupheim (DE); Prinz, Heino, Dr., 88471 Laupheim (DE)
(74) Vertreter: Wächter, Jochen

(57) **Zusammenfassung**

Das Verfahren zum Verifizieren des Füllvolumens von Höfen (11) eines Blisters (5), die mit einer pulverförmigen Substanz (13) mit einer geringen Schichtdicke gefüllt sind, umfasst folgende Schritte: Bereitstellen (40) mindestens eines sich in einem Messbereich (9) einer Messvorrichtung (3) befindlichen Blisters (5) mit einer Vielzahl von Höfen (11), die mit einer pulverförmigen Substanz mit einer geringen Schichtdicke gefüllt sind; Bestrahlen (42) der pulverförmigen Substanz (13) in mindestens einem der Höfe (11) des Blisters (5) mit Strahlung im nahen Infrarotbereich; Aufnehmen (44) von zumindest Teilbereichen eines Ist-Reflexionsspektrums (25b) durch Detektion der aus jedem Hof (11) zurückgestrahlten Strahlung; Berechnen (46) von Ist-Werten, die mit den im Ist-Reflexionsspektrum (25b) dargestellten Intensitäten zusammenhängen, für zumindest Teilbereiche des Ist-Reflexionsspektrums (25b); Vergleichen (48) der berechneten Ist-Werte mit entsprechenden Referenzwerten, die mit den in mindestens einem Modellspektrum (25a) dargestellten Intensitäten zusammenhängen, in zumindest Teilbereichen des Ist-Reflexionsspektrums (25b); und Verifizieren des Verhältnisses von Schichtdicke zu Dichte der pulverförmigen Substanz (13) in Abhängigkeit vom Ergebnis des Vergleichs.

## Beschreibung

Die vorliegende Erfindung betrifft ein Verfahren zum Verifizieren des Füllvolumens von Blisterhöfen, die mit einer pulverförmigen Substanz mit einer geringen Schichtdicke gefüllt sind.

Bis vor einigen Jahren wurden pulverförmige Arzneimittel in den Höfen der Blisterverpackungen durch besonders aufwändige Wiegeeinrichtungen abgewogen, um die korrekte Menge der pulverförmigen Substanz in den Höfen der Blisterverpackungen zu kontrollieren. Aufgrund der Komplexität der Wiegevorrichtungen konnten jedoch lediglich Stichproben genommen werden.

Als Verbesserung wurde vorgeschlagen, die Volumenmessung geringer Mengen an Pulver in Blisterhöfen mittels kapazitiver Messsensoren durchgeführt. Ein derartiges Verfahren ist beispielsweise aus der EP 1 193 177 A bekannt. Bei diesem Verfahren werden kapazitive Messgrößen der pulverförmigen Substanz in den einzelnen Höfen eines Blisters gemessen und vom ermittelten Wert auf die Füllmenge in jedem Hof des Blisters geschlossen. Nachteilig an derartigen Verfahren ist insbesondere die Komplexität des Messsensors, da für jeden einzelnen Hof ein eigener Sensor und die zugehörige Elektronik bereitgestellt werden müssen.

Ebenfalls bekannt sind Messvorrichtungen im nahen Infrarotbereich, mit denen NIR-Spektren von in Tabletten oder pulverförmigen Substanzen enthaltenen Molekülmischungen aufgenommen werden können (z.B. EP 0 887 638 A). Durch Vergleich der relativen Absorptionsintensitäten bei produktspezifischen Wellenlängen lassen sich Rückschlüsse auf die relative Gewichtsverteilung, also die Konzentration, der einzelnen Stoffe in dem Gemisch ziehen. Eine absolute Mengenbestimmung von Fest- oder Pulvermischungen ist hingegen mittels NIR-Spektroskopie normalerweise nicht möglich, da das spektroskopische Antwortsignal durch den so genannten Anisotropieeffekt nicht direkt proportional zur durchstrahlten Schichtdicke ist.

Der vorliegenden Erfindung liegt die Aufgabe zu Grunde, ein Verfahren zum Verifizieren des Füllvolumens von Höfen eines Blisters, die mit einer dünnen Schicht einer pulverförmigen Substanz gefüllt sind, zu schaffen, mit dem auch bei hohen Produktionsgeschwindigkeiten der Blisterverpackungsmaschinen eine sichere, schnelle und mit geringem Aufwand durchzuführende Füllkontrolle jedes einzelnen Hofes vorgenommen werden kann.

Das erfindungsgemäße Verfahren zum Verifizieren des Füllvolumens von Höfen eines Blisters, die mit einer pulverförmigen Substanz mit einer geringen Schichtdicke gefüllt sind, weist folgende Schritte auf: Bereitstellen mindestens eines sich in einem Messbereich einer Messvorrichtung befindlichen Blisters mit einer Vielzahl von Höfen, die mit einer pulverförmigen Substanz mit einer geringen Schichtdicke gefüllt sind, Bestrahlen der pulverförmigen Substanz in mindestens einem der Höfe des Blisters mit Strahlung im nahen Infrarotbereich, Aufnehmen von zumindest Teilbereichen eines Ist-Reflexionsspektrums durch Detektion der aus dem Hof zurückgestrahlten Strahlung, Berechnen von Ist-Werten, die mit den im Ist-Reflexionsspektrum dargestellten Intensitäten zusammenhängen, für zumindest Teilbereiche des Ist-Reflexionsspektrums, Vergleichen der berechneten Ist-Werte mit entsprechenden Referenzwerten, die mit den in mindestens einem Modellspektrum dargestellten Intensitäten zusammenhängen, in zumindest Teilbereichen des Ist-Reflexionsspektrums, und Verifizieren des Verhältnisses von Schichtdicke zu Dichte der pulverförmigen Substanz in Abhängigkeit vom Ergebnis des Vergleichs.

Aufgrund der Proportionalität zwischen dem Verhältnis von Schichtdicke zu Dichte der pulverförmigen Substanz und der Menge der pulverförmigen Substanz wird so gewährleistet, dass auf einfache Weise in einer nahezu beliebig großen Anzahl von Höfen das Füllvolumen der pulverförmigen Substanz überprüft werden kann, ohne die Geschwindigkeit der Produktions- und Verpackungskette reduzieren zu müssen.

Üblicherweise wird jedes Modellspektrum durch folgende Schritte erhalten: Bereitstellen mindestens eines Blisters mit einer Vielzahl von Höfen, die mit einer pulverförmigen Substanz mit einer vorbestimmten Schichtdicke gefüllt sind, Bestrahlen der pulverförmigen Substanz in mindestens einem der Höfe des Blisters mit Strahlung im nahen Infrarotbereich, und Aufnehmen von zumindest Teilbereichen eines Modellspektrums durch Detektion der aus dem Hof zurückgestrahlten Strahlung. Auf diese Weise wird ein zuverlässiges Modellspektrum geschaffen, das auf die speziellen Eigenschaften der zu untersuchenden pulverförmigen Substanz sowie die geometrischen Rahmenbedingungen bei der Messung kalibriert ist.

Um auf einfache Weise aus den Spektren miteinander zu vergleichende Daten zu extrahieren, erfolgt die Berechnung der Referenzwerte aus dem Modellspektrum auf dieselbe Weise wie die Berechnung der Ist-Werte aus dem Ist-Reflexionsspektrum.

Ein weiterer Vorteil des erfindungsgemäßen Verfahrens liegt darin, dass mehrere Blister entweder auf einem Transportband getaktet zu dem Messbereich der Messvorrichtung gefördert werden können oder dass sie auf dem Transportband kontinuierlich durch den Messbereich der Messvorrichtung gefördert werden können.

Zur schnellen Erstellung der Spektren erfolgt die Detektion der aus dem Hof zurückgestrahlten Strahlung vorteilhafter Weise durch Weiterleiten der zurückgestrahlten Strahlung mittels zweier in jeweils eine Richtung beweglicher Spiegel zu einem Spektrometer. Somit können bei Verwendung lediglich eines Spektrometers alle Höfe der im Messbereich befindlichen Blister in extrem kurzen Zeitabschnitten hintereinander geprüft werden.

Zur Sicherung der Qualität des Überprüfungsverfahrens ist es vorteilhaft, dass mehrere verschiedene Modellspektren in Abhängigkeit von der örtlichen Ausrichtung eines jeden Hofes aufgenommen werden.

Um selbst kleine Abweichungen der Messgenauigkeit zu vermeiden, wird vor dem Bestrahlen der pulverförmigen Substanz mit Strahlung im nahen Infrarotbereich vorzugsweise der Schwerpunkt der pulverförmigen Substanz im Hof mittels einer Kamera erfasst und berechnet, und die Spiegel werden auf den jeweiligen Schwerpunkt eingestellt.

Da sich die Reflexionsspektren bei unterschiedlicher Kompaktierung der pulverförmigen Substanz erheblich ändern, ist es vorteilhaft, dass vor dem Bestrahlen der pulverförmigen Substanz mit Strahlung im nahen Infrarotbereich die flächenmäßige Ausdehnung und damit die Kompaktheit des pulverförmigen Materials mittels einer Kamera geprüft wird.

In einer besonderen Ausführungsform, die den Vergleich zwischen den Intensitätskurven erleichtert, werden die Ist-Werte und die Referenzwerte als erste oder zweite Ableitungen der Intensitätskurven des Ist-Reflexionsspektrums und des Modellspektrums berechnet oder es werden andere mathematische Verfahren wie Rotationskorrektur oder Wavelet-Analysen herangezogen.

In einer zur Erkennung von fehlerhaften Füllständen eingesetzten Form des erfindungsgemäßen Verfahrens wird der Vergleich der Ist-Werte mit den Referenzwerten als negativ bewertet, wenn sich die Ist-Werte von den Referenzwerten um einen vorbestimmten Wert unterscheiden, wodurch ein Ablehnungskriterium für den Blister erzeugt wird.

Besonders vorteilhaft ist es, die Ist-Werte mit Referenzwerten mehrerer Modellspektren, die mit pulverförmigen Substanzen unterschiedlicher Schichtdicke und unterschiedlicher Dichte aufgenommen wurden, zu vergleichen.

Weitere Einzelheiten, Merkmale und Vorteile des erfindungsgemäßen Verfahrens ergeben sich aus der nachfolgenden Beschreibung unter Bezugnahme auf die Zeichnungen.
- Fig. 1: ist eine schematische Perspektivansicht einer NIR-Messvorrichtung zur Durchführung des erfindungsgemäßen Verfahrens zum Verifizieren des Füllvolumens von Höfen eines Blisters, die mit einer pulverförmigen Substanz einer geringen Schichtdicke gefüllt sind;
- Fig. 2: ist ein Ablaufdiagramm einer bevorzugten Art der Erzeugung von Modellspektren, die im erfindungsgemäßen Verfahren verwendet werden; und
- Fig. 3: ist ein Ablaufdiagramm des erfindungsgemäßen Verfahrens zum Verifizieren des Füllvolumens von Höfen eines Blisters, die mit einer pulverförmigen Substanz mit einer geringen Schichtdicke gefüllt sind.

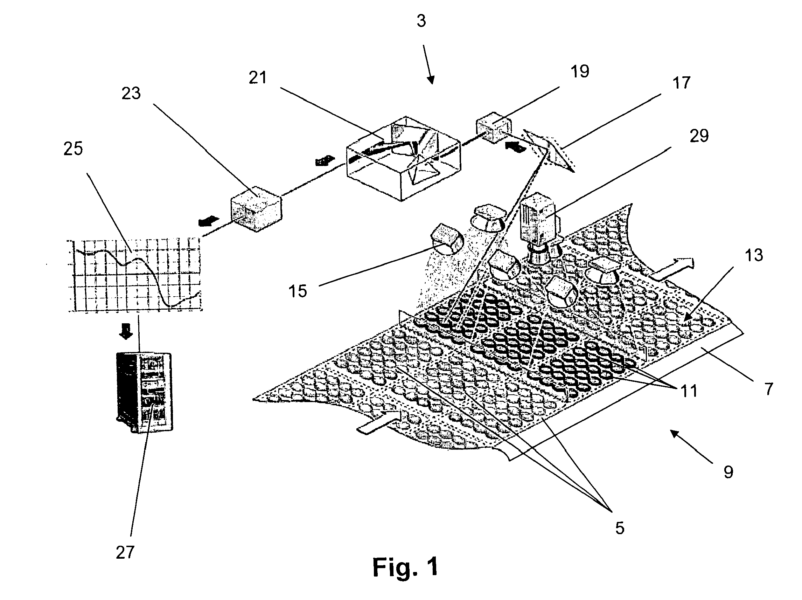

In Fig. 1 ist eine NIR-Messvorrichtung 3 dargestellt, die zum Durchführen des erfindungsgemäßen Verfahrens geeignet ist. Die zu prüfenden Blister 5 werden auf einem Transportband 7 getaktet oder kontinuierlich zu einem Messbereich 9 der NIR-Messvorrichtung 3 transportiert. Wie in Fig. 1 dargestellt ist, können auf dem Transportband 7 nebeneinander mehrere Blisterverpackungen 5 angeordnet sein, von denen jede einzelne wiederum eine beliebige Anzahl von üblicherweise in Längs- und Querreihen angeordneten Höfen 11 aufweist.

Die Höfe 11 sind in Richtung des Transportbandes 7 nach unten gewölbt und mit einer pulverförmigen Substanz 13 gefüllt, die in jedem Hof 11 lediglich eine geringe Schichtdicke aufweist. Bevorzugt für das erfindungsgemäße Verfahren ist ein Schichtdickenbereich von 0,5 bis 1,5 mm, wobei bis zu einer Schichtdicke von ca. 2 mm noch gute Ergebnisse erzielt werden können.

Die einzelnen Höfe 11 bestehen beispielsweise aus Aluminium oder einem anderen reflektierenden Material und sind noch nicht mit einer Abdeckfolie überzogen, damit die Messung zum Verifizieren des Füllvolumens der Höfe 11 ungehindert durchgeführt werden kann. Die Versiegelung der Höfe 11 erfolgt im Anschluss an die Qualitätskontrolle.

Es ist bevorzugt, dass die einzelnen Blister 5 dem Messbereich 9 in wiederkehrenden Mustern zugeführt werden, beispielsweise in Dreierreihen, wie es in Fig. 1 gezeigt ist. Auch bei hohen Geschwindigkeiten des Transportbandes 7 können mit dem erfindungsgemäßen Verfahren immer noch alle Höfe 11 jedes einzelnen Blisters 5 überprüft werden, bis hin zu 200 Höfen pro Sekunde.

Die NIR-Messvorrichtung 3 besteht aus einer oder bevorzugt einer Mehrzahl von NIR-Leuchten 15, die dem gesamten Messbereich 9 mit Strahlung im nahen Infrarotbereich überdecken. Das anregende homogene NIR-Licht wird beim Durchdringen der pulverförmigen Substanz 13 teilweise direkt von den Molekülkristallen nach spektroskopischer Absorption nach allen Seiten reflektiert. Teile der Reflexionsstrahlung durchdringen jedoch ebenso wie das nicht absorbierte anregende NIR-Licht die gesamte Schicht des pulverförmigen Materials 13 und werden am Boden der Höfe 11 wieder reflektiert, woraufhin sie erneut mit dem Pulvergemisch wechselwirken. Das auf diese Weise aus dem Hof 11 zurückgestrahlte Licht besitzt überraschenderweise zumindest in Teilbereichen des Spektrums eine absolute Intensitätskorrelation zur durchstrahlten Schichtdicke. Es wird davon ausgegangen, dass die anfängliche anisotrope Streuung durch die Rückspiegelung am Boden der Höfe und den damit erzielten zweimaligen Durchgang der NIR-Strahlung durch die pulverförmige Substanz homogenisiert wird und dadurch die Intensität der aus dem Hof zurückgestrahlten Strahlung proportional zur durchstrahlten Schichtdicke wird.

Üblicherweise werden jeweils ein in x-Richtung und ein in y-Richtung beweglicher Spiegel 17 verwendet (in Fig. 1 ist hingegen zur Vereinfachung lediglich ein Spiegel dargestellt), um die von den Höfen zurückgestrahlte Strahlung aufzunehmen und beispielsweise über ein Glasfaserkabel 19 an ein Spektrometer 21 weiterzuleiten. Im Spektrometer 21 wird die Strahlung nach ihren Wellenlängen aufgeteilt, und die Signale werden von einem Analogzu-Digital-Wandler 23 in ein Intensitätsspektrum 25 umgewandelt. Dieses Intensitätsspektrum 25 kann über den gesamten NIR-Bereich oder auch Teilbereiche hiervon ausgedehnt sein, wobei die entstehende Intensitätskurve die Intensität der zurückgestrahlten Strahlung bei jeder Wellenlänge angibt. Als Intensitätsspektrum 25 kommen sowohl Modellspektren 25a als auch bei der tatsächlichen Prüfung aufgenommene Ist-Reflexionsspektren 25b in Frage. Die Auswertung der aufgenommen Spektren 25a, 25b erfolgt in einer Auswerteeinheit 27.

Optional kann eine Kamera 29 vor dem Messbereich 9 oder direkt über dem Messbereich 9 angeordnet sein, die eine Vorprüfung der Höfe 11 auf Leerstände bzw. auf zu starke Kompaktierung der pulverförmigen Substanz 13 durchführt. Letzteres kann über die geringe Flächenausdehnung eines stark kompaktierten Pulvermaterials festgestellt werden. Außerdem kann die Kamera 29 dazu verwendet werden, den Schwerpunkt der pulverförmigen Substanz 13 in den jeweiligen Höfen 11 festzustellen, woraufhin die elektronisch gesteuerte Bewegung des Spiegels 17 derart eingestellt wird, dass jeweils der von einem Schwerpunkt eines Hofes 11 zurückgestrahlte Strahl zum Spektrometer 21 geleitet wird. Ansonsten erfolg die Messung im Mittelpunkt des Hofes 11. Die Steuerung der Spiegel bewegung ist hochgradig komplex und erfolgt automatisiert mittels einer nicht dargestellten Steuereinrichtung. Es können darin vorprogrammierte Abläufe der Spiegelbewegung ebenso ausgelöst werden wie kurzfristig änderbare Abläufe, die auf das von der Kamera 29 gelieferte Signal bezüglich des jeweiligen Schwerpunkts der pulverförmigen Substanz in den Höfen 11 abgestimmt werden.

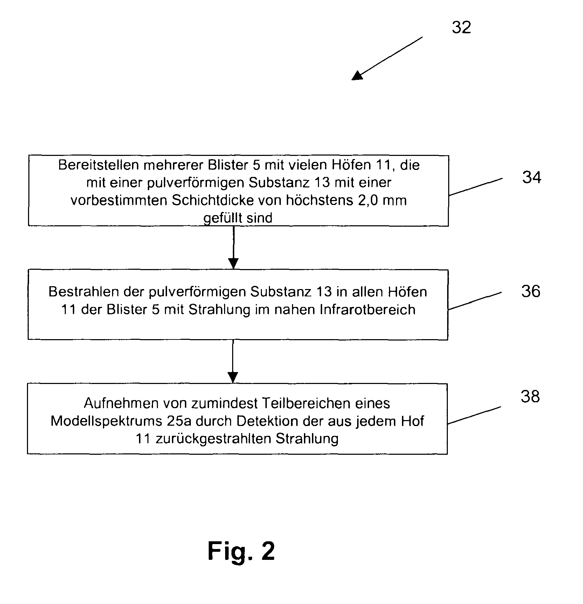

Fig. 2 zeigt ein Ablaufdiagramm eines Verfahrens 32 zum Aufnehmen eines Modellspektrums 25a, das bei der späteren Überprüfung des Füllvolumens von Höfen 11 mit dem tatsächlich aufgenommenen Ist-Reflexionsspektrum 25b des zu prüfenden Hofes 11 verglichen wird. Ebenso kann es möglich sein, als Modellspektrum 25a ein Spektrum zu verwenden, das durch Mittelung früherer Messergebnisse oder durch Ableitung aus einem ähnlichen Messspektrum einer Substanz mit geringfügig unterschiedlichen Eigenschaften, z.B. geringfügig unterschiedlicher Schichtdicke oder geringfügig unterschiedlicher Zusammensetzung, erhalten wird.

Im Regelfall wird jedoch ein Modellspektrum für einen Hof 11 dadurch erhalten, dass mehrere Blister 5 mit vielen Höfen 11 in den Messbereich 9 gebracht werden, wobei die pulverförmige Substanz 13 eine zuvor bestimmte Schichtdicke von höchstens 2,0 mm, vorzugsweise 0,5 mm bis 1,5 mm, und eine gewünschte Kompaktheit besitzt (Schritt 34). Wie zuvor beschrieben ist es möglich, die Modellspektren 25a für viele verschiedene Höfe 11 gleichzeitig über die beweglichen Spiegel 17 und das Spektrometer 21 zu erfassen, wobei es enorm wichtig ist, die Kalibration für jede Hofposition bzw. jeden Detektorwinkel vorzunehmen.

Eine weitere Grundlage für die korrekte Korrelation zwischen Signalintensität und Schichtdicke ist neben feststehendem Einstrahl- und Detektorwinkel die Annahme einer konstanten mittleren Dichte des Pulvergemisches über die Messzeit. Sollte dies nicht gegeben sein, wird zusätzlich zur reinen Messung die Bestimmung eines Korrelationskoeffizienten notwendig, der die dann multiplen Kalibrationsfunktionen vor der eigentlichen Messung auswählt. In jedem Fall ist das erhaltene Verhältnis zwischen Schichtdicke und Dichte der pulverförmigen Substanz direkt proportional zur Menge der pulverförmigen Substanz.

Wenn die pulverförmige Substanz 13 in allen Höfen 11 der Blister 5 mittels der NIR-Leuchten 15 mit Strahlung im nahen Infrarotbereich bestrahlt ist (Schritt 36), wird die von den Höfen 11 zurückgestrahlte Strahlung über die Spiegel 17 und das Glasfaserkabel 19 zum Spektrometer 21 geleitet und durch den A/D-Wandler 23 in das Modellspektrum 25a umgewandelt (Schritt 38).

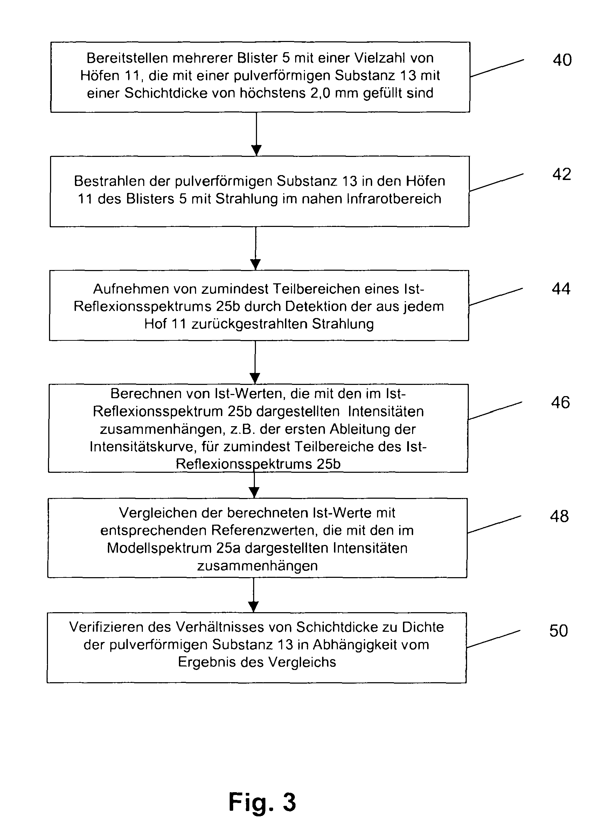

Fig. 3 zeigt den standardmäßigen Ablauf des erfindungsgemäßen Verfahrens zum Verifizieren der Füllhöhe von Blisterhöfen. Wie bei der Aufnahme des Modellspektrums 25a werden mehrere Blister 5 mit der Vielzahl von Höfen 11, die mit einer pulverförmigen Substanz 13 mit einer Schichtdicke von höchstens 2,0 mm gefüllt sind, mittels des Transportbandes 7 in den Messbereich 9 der NIR-Messvorrichtung 3 gefördert (Schritt 40). Die pulverförmige Substanz 13 in den Höfen 11 der Blister 5 wird wiederum mittels der NIR-Leuchten 15 mit Strahlung im nahen Infrarotbereich bestrahlt (Schritt 42). Die aus jedem Hof 11 zurückgestrahlte Strahlung wird zumindest zu Teilbereichen eines Ist-Reflexionsspektrums 25b umgewandelt (Schritt 44), wobei die Erzeugung des Ist-Reflexionsspektrums 25b analog verläuft zur Aufnahme des Modellspektrums 25a, die unter Bezugnahme auf Fig. 2 weiter oben beschrieben wurde.

In einer Auswerteeinheit 27 werden nun in Schritt 46 Ist-Werte berechnet, die mit den im Ist-Reflexionsspektrum 25b dargestellten Intensitäten zusammenhängen. Beispiele dieser Ist-Werte sind die Intensitätskurve selbst, die erste Ableitung oder die zweite Ableitung der Intensitätskurve. Es ist aber ebenso möglich, andere Ist-Werte zu berechnen, die in einem unmittelbaren Zusammenhang mit den aufgenommenen Intensitäten stehen, etwa mittels mathematischer Verfahren wie Rotationskorrektur oder Wavelet-Analyse. In Schritt 48 werden nunmehr in der Auswerteeinheit 27 die berechneten Ist-Werte mit entsprechenden Referenzwerten verglichen, die möglichst auf identische Weise wie die Ist-Werte mit den im Modellspektrum 25a dargestellten Intensitäten zusammenhängen. Bei der Berechnung der Referenzwerte werden vorzugsweise dieselben Rechenschritte angewendet wie bei der Berechnung der Ist-Werte.

Es stellt sich heraus, dass abhängig von der zu untersuchenden pulverförmigen Substanz zumindest gewisse Bereiche der Spektren bei unterschiedlichen Schichtdicken der pulverförmigen Substanz 13 eine Abweichung der Ist-Werte von den Referenzwerten zeigen. Durch Auswertung dieser Bereiche kann die Schichtdicke der pulverförmigen Substanz 13 in jedem Hof 11 in Abhängigkeit vom Ergebnis des Vergleichs verifiziert werden (Schritt 50).

Wie bereits weiter oben erwähnt kann eine zusätzliche Kamera 29, die im Bereich sichtbaren Lichts arbeitet, verwendet werden, um den Schwerpunkt der pulverförmigen Substanz 13 in den einzelnen Höfen 11 zu bestimmen und/oder eine Voruntersuchung der Kompaktheit des pulverförmigen Materials 13 anhand der Flächenbedeckung im Hof 11 durchzuführen.

Es ist allerdings auch möglich, eine zu hohe Kompaktheit des pulverförmigen Materials 13 dadurch festzustellen, dass sich die Intensitätswerte des Ist-Reflexionsspektrums 25b bei kompaktiertem Material deutlich von den Ist-Werten bei locker liegendem Pulver 13 unterscheiden.

Daher ist es vorteilhaft, anhand vieler verschiedener Modellspektren 25a, die bei verschiedenen Dichten der pulverförmigen Substanz 13 aufgenommen wurden, eine Korrelation zwischen den Spektren und dem Verhältnis zwischen Schichtdicke und Dichte der pulverförmigen Substanz 13 herzustellen.

Damit können Blister 5 aussortiert werden, bei denen entweder die Füllmenge eines Hofes 11 außerhalb der voreingestellten Toleranzen liegt oder das Material in zu kompaktem Zustand vorliegt.

Auf diese Weise wurde ein Verfahren zum Verifizieren der Füllhöhe von Höfen 11 verschiedener Blister 5 geschaffen, mit dem auf sichere Weise auch bei hohen Produktionsgeschwindigkeiten jeder einzelne Hof 11 aller Blisterverpackungen 5 automatisch mittels einer einzigen Messvorrichtung 3 überprüft werden kann.

## Patentansprüche

1. Verfahren zum Verifizieren des Füllvolumens von Höfen (11) mindestens eines Blisters (5), die mit einer pulverförmigen Substanz (13) mit einer geringen Schichtdicke gefüllt sind, mit folgenden Schritten:
- Bereitstellen (40) mindestens eines sich in einem Messbereich (9) einer Messvorrichtung (3) befindlichen Blisters (5) mit einer Vielzahl von Höfen (11), die mit einer pulverförmigen Substanz (13) mit einer geringen Schichtdicke gefüllt sind;
- Bestrahlen (42) der pulverförmigen Substanz (13) in mindestens einem der Höfe (11) des mindestens einen Blisters (5) mit Strahlung im nahen Infrarotbereich;
- Aufnehmen (44) von zumindest Teilbereichen eines Ist-Reflexionsspektrums (25b) für jeden Hof (11) durch Detektion der aus dem Hof (11) zurückgestrahlten Strahlung;
- Berechnen (46) von Ist-Werten, die mit den im Ist-Reflexionsspektrum (25b) dargestellten Intensitäten zusammenhängen, für zumindest Teilbereiche des Ist-Reflexionsspektrums (25b);
- Vergleichen (48) der berechneten Ist-Werte mit entsprechenden Referenzwerten, die mit den in mindestens einem Modellspektrum (25a) dargestellten Intensitäten zusammenhängen, in zumindest Teilbereichen des Ist-Reflexionsspektrums (25b); und
- Verifizieren (50) des Verhältnisses von Schichtdicke zu Dichte der pulverförmigen Substanz (13) in Abhängigkeit vom Ergebnis des Vergleichsschritts (48).

2. Verfahren nach Anspruch 1, **dadurch gekennzeichnet, dass** jedes Modellspektrum (25a) erhalten wird durch die folgenden Schritte:
- Bereitstellen (34) mindestens eines Blisters (5) mit einer Vielzahl von Höfen (11), die mit einer pulverförmigen Substanz (13) mit einer vorbestimmten Schichtdicke gefüllt sind;
- Bestrahlen (36) der pulverförmigen Substanz (13) in mindestens einem der Höfe (11) des mindestens einem Blisters (5) mit Strahlung im nahen Infrarotbereich; und
- Aufnehmen (38) von zumindest Teilbereichen eines Modellspektrums (25a) für jeden Hof (11) durch Detektion der aus dem Hof (11) zurückgestrahlten Strahlung.

3. Verfahren nach Anspruch 1 oder 2, **dadurch gekennzeichnet, dass** die Berechnung der Referenzwerte aus dem Modellspektrum (25a) auf dieselbe Weise erfolgt wie die Berechnung der Ist-Werte aus dem Ist-Reflexionsspektrum (25b).

4. Verfahren nach einem der vorangehenden Ansprüche, **dadurch gekennzeichnet, dass** mehrere Blister (5) auf einem Transportband (7) getaktet zu dem Messbereich (9) der Messvorrichtung (3) gefördert werden.

5. Verfahren nach einem der Ansprüche 1 bis 3, **dadurch gekennzeichnet, dass** mehrere Blister (5) auf einem Transportband (7) kontinuierlich durch den Messbereich (9) der Messvorrichtung (3) gefördert werden.

6. Verfahren nach einem der vorangehenden Ansprüche, **dadurch gekennzeichnet, dass** die Detektion der aus dem Hof (11) zurückgestrahlten Strahlung durch Weiterleiten der zurückgestrahlten Strahlung mittels zweier jeweils in einer Richtung beweglicher Spiegel (17) zu einem Spektrometer (21) erfolgt.

7. Verfahren nach Anspruch 6, **dadurch gekennzeichnet, dass** mehrere verschiedene Modellspektren (25a) in Abhängigkeit von der örtlichen Ausrichtung eines jeden Hofes (11) aufgenommen werden.

8. Verfahren nach Anspruch 7, **dadurch gekennzeichnet, dass** vor dem Bestrahlen (36, 42) der pulverförmigen Substanz (13) mit Strahlung im nahen Infrarotbereich der Schwerpunkt der pulverförmigen Substanz (13) in jedem Hof (11) mittels einer Kamera (29) erfasst und berechnet wird, und dass die Spiegel (17) auf den jeweiligen Schwerpunkt eingestellt werden.

9. Verfahren nach einem der vorangehenden Ansprüche, **dadurch gekennzeichnet, dass** vor dem Bestrahlen (36, 42) der pulverförmigen Substanz (13) mit Strahlung im nahen Infrarotbereich die flächenmäßige Ausdehnung und damit die Kompaktheit des pulverförmigen Materials (13) mittels einer Kamera (29) geprüft wird.

10. Verfahren nach einem der vorangehenden Ansprüche, **dadurch gekennzeichnet, dass** die Ist-Werte und die Referenzwerte als erste oder zweite Ableitungen der Intensitätskurven des Ist-Reflexionsspektrums (25b) und des Modellspektrums (25a) berechnet werden, oder andere mathematische Verfahren wie Rotationskorrektur oder Wavelet-Analysen herangezogen werden..

11. Verfahren nach einem der vorangehenden Ansprüche, **dadurch gekennzeichnet, dass** der Vergleich der Ist-Werte mit den Referenzwerten als negativ bewertet wird, wenn sich die Ist-Werte von den Referenzwerten um einen vorbestimmten Wert unterscheiden, wodurch ein Ablehnungskriterium für den Blister (5) erzeugt wird.

12. Verfahren nach einem der vorangehenden Ansprüche, **dadurch gekennzeichnet, dass** die Ist-Werte mit Referenzwerten mehrerer Modellspektren (25a), die mit pulverförmigen Substanzen unterschiedlicher Schichtdicke und unterschiedlicher Dichte aufgenommen wurden, verglichen werden.
